**Europäisches Patentamt**

**European Patent Office**

**Office européen des brevets**

(19)

(11) Veröffentlichungsnummer: **0 225 613**
A2

(12) # EUROPÄISCHE PATENTANMELDUNG

(21) Anmeldenummer: **86116897.9**

(22) Anmeldetag: **04.12.86**

(51) Int. Cl.⁴: **B 01 D 46/04**

(30) Priorität: **10.12.85 CH 5253/85**

(43) Veröffentlichungstag der Anmeldung: **16.06.87**
Patentblatt 87/25

(84) Benannte Vertragsstaaten: **AT BE CH DE ES FR GB GR IT LI NL SE**

(71) Anmelder: **Gebrüder Bühler AG, CH-9240 Uzwil (CH)**

(72) Erfinder: **Bohm, Arturo, Schlattrainstrasse 16,**
**CH-9242 Oberuzwil (CH)**
Erfinder: **Greminger, Hansueli, Armetsholzstrasse 17b,**
**CH-9244 Niederuzwil (CH)**
Erfinder: **Sonderegger, Fritz, Felsenstrasse 67,**
**CH-9000 St. Gallen (CH)**
Erfinder: **Zimmermann, René, Hüseren,**
**CH-9523 Züberwangen (CH)**

(74) Vertreter: **Bergerin, Ralf, Dipl.-Ing., c/o BÜHLER-MIAG GmbH Postfach 3369, D-3300 Braunschweig (DE)**

(54) **Filter für Luft und Gase.**

(57) Die im Staubgasraum (13) angeordneten Filterschläuche (21) münden in den Reingasraum (14) und die gereinigte Luft verlässt den Filter durch den Auslass (24). Zur periodischen, reihenweisen Reinigung der Filterschläuche (21) wird durch die schnelle Öffnung eines der Ventile (27) Spülluft aus dem Druckbehälter (25) durch die Ausblasdüsen (32) einer Spülluftlanze (31) stossartig in die Mündung der Filterschläuche (21) eingeblasen. Im Grundriss gesehen ist der Druckluftbehälter (25) im Bereich der Filterschläuche (21) angeordnet.

**EP 0 225 613 A2**

TZ 013

## Filter für Luft und Gase

Die Erfindung betrifft einen Filter für Luft und Gase mit in
einem Staubgasraum angeordneten Filterkörpern wie Filterschläuchen, Filtersäcken u.dgl., die in einen Reingasraum münden, mit
einer Spülvorrichtung zum periodischen, stossweisen Einblasen von
Spülluft in die Mündungen der Filterkörper, wobei diese Spülluftvorrichtung einen Druckluftbehälter mit an seiner Wandung angebrachten Spülluftventilen zum wahlweisen Beaufschlagen von im
Reingasraum angeordneten, jeweils eine Reihe von Ausblasdüsen
tragenden Spülluftlanzen aufweist, die mit den Spülluftventilen
über Spülluftleitungen verbunden sind, die an einer anderen Stelle durch die Wandung des Druckluftbehälters in diesen bis zum zugeordneten Ventil eindringen.

Solche Filter haben den Vorteil eines kurzen Weges vom Druckluftbehälter zu den Ausblasdüsen und einer besonders vorteilhaften
Umsetzung des Druckes in Geschwindigkeit. Sie erlauben es, mit
einem minimalen Druck im Druckluftbehälter trotzdem starke Reinigungsstösse durch die Ausblasdüsen abzugeben. Der relativ
kleine Druck führt zu einer Reihe von betrieblichen Vorteilen
gegenüber den Filtern mit Hochdruckspülung, was die etwas grösseren lichten Querschnitte des Druckbehälters und der Spülluftlanzen rechtfertigt.

Ein entsprechender Filter geht aus der US-A 4 033 732 hervor.
Der Druckluftbehälter ist seitlich vom Staubgasraum angeordnet,
der die Filterschläuche enthält, und vergrössert somit die für
den Filter notwendige Grundrissfläche. Hinzu kommt, dass die
Wartung der Spülluftventile von der Seite erfolgen muss, was
den Platzbedarf zusätzlich erhöht.

In der DE-C 25 45 252 ist das Ventil am Druckluftbehälter oben
angeordnet. Wohl entfällt ein Teil des zusätzlichen Platzbedarfs für die Wartung der Spülluftventile, aber die Spülluftleitungen innerhalb des Druckbehälters sind bogenförmig, was die Herstellung dieses Druckluftbehälters besonders erschwert.

Die Erfindung erlaubt es, mit einfachen Mitteln einen Filter der obengenannten Gattung bei noch besserer Umsetzung des Druckes in Geschwindigkeit platzsparend zu bauen, wobei die Spülluftventile gut zugänglich sind. Bei Filtern mit runder Staubluftkammer, z.B. bei Filtern in druckfester Ausführung, kann der Druckluftbehälter innerhalb der druckfesten Hülle, ohne Vergrösserung des Grundrisses angebracht werden.

Der erfindungsgemässe Filter ist dadurch gekennzeichnet, dass der an der oberen Wand des Reingasraumes befestigte Druckluftbehälter, im Grundriss gesehen, im Bereich der Filterkörper angeordnet ist, wobei die Spülluftleitungen vertikal verlaufen und mit den Spülluftlanzen zwischen Gruppen von Ausblasdüsen, vorzugsweise in der Mitte dieser Spülluftlanzen, verbunden sind.

Vereinzelt ist schon die Massnahme angewendet worden, eine Spüllluftleitung mit einer Spülluftlanze in der Mitte dieser Spülluftlanze anzuschliessen, statt wie üblich die Spülluftlanze coaxial am Ende der kurzen Spülluftleitung zu befestigen. Diese Massnahme ist aber, wie aus der US-A 4 077 781 ersichtlich, ohne Rücksicht auf die Anordnung des Druckluftbehälters getroffen worden, so dass die Möglichkeit nicht erkannt werden konnte, diese Massnahme für eine platzsparende Anordnung des Druckluftbehälters anzuwenden. Ferner ist das Spülluftventil an eine Speiseleitung angeschlossen und es steht nicht die ganze für das stossartige Ausblasen benötigte Druckluftmenge am Ventil selber zur Verfügung, wie dies bei einem gattungsgemässen Filter der Fall ist. Bei der US-A 4 077 781 muss während des Ausblasens die Druckluft durch die Speiseleitung zum Luftspülventil fliessen, was den Wirkungsgrad des Umsetzens des Druckes in Geschwindigkeit so stark herabsetzt, dass ein viel höherer Druck verwendet werden muss. Damit konnte auch nicht erkannt werden, dass gerade diese Massnahme eine Verbesserung der Strömung bringt, die beim kleinen Druck im
Druckluftbehälter eines gattungsgemässen Filters einen beträchtlichen Einfluss auf den Gesamtwirkungsgrad hat, beim hohen Druck
nach der US-A 4 077 781 aber kaum eine Rolle spielt.

Diese Verbesserung der Strömung erfolgt, weil sich der Durchsatz
der in der Spülluftlanze strömenden Spülluft bei jeder Ausblasedüse um die abgeführte Menge vermindert. Die Geschwindigkeit
fällt entlang der aus wirtschaftlichen Gründen zylindrischen
Spülluftlanze,und der statische Druck steigt bei jeder folgenden
Ausblasdüse. Damit ist die Spülwirkung bei der letzten Ausblasdüse, an dem abgeschlossenen Ende der Spülluftlanze, am besten.
Bei einem mittigen Einlauf in die Spülluftlanze gibt es auf jeder
Seite halb so viel Ausblasedüsen wie bei der einseitigen Spülluftlanze. Somit ist der Druckverlauf gleichmässiger.

In Weiterentwicklung der Erfindung können die Spülluftleitungen
mit den Spüllanzen T-förmig oder über zwei entgegengesetzte Bögen
verbunden werden. In beiden Fällen ist die Herstellung einfach
und die Strömung günstig.

Wenn die Durchmesser einer Spülluftlanze und ihrer Spülluftleitung gleich sind, wird eine weitere Verbesserung der Strömung
erreicht: bei gleichem Durchmesser ist die Luftgeschwindigkeit in
der Spülluftlanze nur halb so gross, und somit sind die Druckverluste nur ein Viertel so gross wie in einer einseitig beaufschlagten Spülluftlanze.

In besonderen Fällen, insbesondere bei Filtern mit runden Staubgaskammern, zweigt eine Ausblasdüse zuerst schräg nach unten von
einer Spülluftlanze ab und geht in einen vertikalen Ausblasteil
über. Bei bestimmten Querschnitten der Spülluftlanze können Ausblasdüsen mit schrägem Verlauf symmetrisch zu einer vertikalen
Ebene durch die Längsachse der Spülluftlanze angeordnet werden.
Bei anderen Querschnitten der Spülluftlanze können Ausblasdüsen mit schrägem Verlauf einseitig zur vertikalen Ebene durch die
Längsachse der Spülluftlanze angeordnet werden.

Damit kann mit einem auf einem Durchmesser der kreisförmigen
oberen Wand des Reingasraumes angebrachten Druckluftbehälter
und mit den quer dazu angeordneten Spülluftlanzen der ganze
Grundriss des Staubluftraumes abgedeckt werden, wobei an den
Enden des Druckluftbehälters die Spülluftlanzen kurz sind und
deshalb zwischen zwei Reihen Filterschläuche angeordnet werden
können, weil die Anzahl möglicher Ausblasdüsen pro Lanze für zwei
kurze Reihen Filterschläuche genügt. Es können zwei ungleich lange Reihen beaufschlagt werden.

Die Erfindung ist besonders geeignet, wenn bei der Wartung die
Filterschläuche bei geöffnetem Reingasraum von oben aus- und eingebaut werden. Zu diesem Zweck kann die obere Wand des Reingasraumes in bekannter Art als Deckel beweglich ausgebildet werden.

Bei aufklappbar ausgeführter oberer Wand gewinnt man dank der
erfindungsgemässen Anordnung des Druckluftbehälters eine besondere Freiheit bei der Planung von Grossfiltern, die aus Reihen
von Filtern zusammengesetzt sind. Bisher musste wegen der seitlichen Anordnung des Druckluftbehälters die Achse der aufklappbaren Wand seitlich parallel zur Richtung der Reihe angeordnet
werden. Neu ist es möglich, diese Achse auf der Seite des Filters anzuordnen, wo ein weiterer Filter angeordnet ist. So kann
die Achse quer zur Richtung der Reihe liegen, weil es nicht mehr
notwendig ist, für die Unterbringung des Druckluftbehälters einen
Abstand zwischen den Filtern vorzusehen.

Es ist auch möglich, eine Hebevorrichtung, vorzugsweise eine
Seilwinde, vorzusehen, um die obere Wand nach oben zu entfernen.
Diese Disposition ist besonders nützlich bei pneumatischen Saughebern für die Entladung von Schüttgut aus Schiffen: Der Filter
kann in dem vorzugsweise zylindrisch ausgeführten Turm des Hebers angeordnet werden. Sein Reingasraum steht unter dem Unterdruck der Fördergebläse. Der Druckluftbehälter befindet sich aber ausserhalb des Unterdruckraumes und ist während des Betriebes zugänglich: Der Teil des Turmes, der unter Unterdruck steht, wird durch keine Zugangstüre und durch keine Durchgänge für die Spülluftleitungen geschwächt.

Die Zeichnung zeigt schematisch als Beispiel vier Ausführungsformen der Erfindung mit einer Variante.

Fig. 1    ist eine Seitenansicht des oberen Teiles eines erfindungsgemässen Filters entsprechend der ersten Ausführrungsform, im Schnitt entlang der Linie I-I der Fig. 2.

Fig. 2    zeigt den Grundriss eines Teiles des Filters nach Fig. 1, wobei oben eine Ansicht und unten ein Schnitt entlang der Linie II-II der Fig. 1, mit entfernten Filterschläuchen, dargestellt sind

Fig. 3    ist ein Schnitt im grösseren Massstab durch den Druckluftbehälter, entlang der Linie III-III der Fig. 2.

Fig. 4    zeigt im grösseren Massstab einen Schnitt durch eine Variante in gleicher Darstellung wie bei der Fig. 1.

Fig. 5    zeigt als zweite Ausführungsform einen Grossfilter im Schnitt entlang der Linie V-V der Fig. 6.

Fig. 6    ist ein Grundriss der Fig. 5.

Fig. 7    zeigt als dritte Ausführungsform einen Filter im Turm eines pneumatischen Saughebers für die Entladung von Schiffen, im Schnitt entlang der Linie VII-VII der Fig. 8.

Fig. 8    ist ein halber Grundriss der Fig. 8, im Schnitt entlang der Linie VIII-VIII der Fig. 7.

Fig. 9      zeigt als vierte Ausführungsform einen grösseren Filter im Turm eines pneumatischen Saughebers für die Entladung von Schiffen, im Schnitt entlang der Linie IX-IX der Fig. 10.

Fig. 10      ist ein Grundriss der Fig. 9, im Schnitt entlang der Linie X-X der Fig. 9, wobei nur die Hälfte der Schlauchfilterstellungen dargestellt ist.

Das Gehäuse 11 des Filters ist durch eine horizontale Trennwand 12 in einen Staubgasraum 13 und einen Reingasraum 14 geteilt. Die obere Wand des Reingasraumes 14 ist als Deckel 16 gestaltet, der um eine Achse 17 am Gehäuse 11 aufklappbar angeordnet ist. Die Trennwand 12 ist mit kreisförmigen Oeffnungen 20 versehen, durch welche, bei geöffnetem Deckel 16, an ihrem unteren Ende geschlossene und oben offene Filterschläuche 21 von oben her eingesteckt worden sind. Diese Filterschläuche 21 sind oben bei ihrer Einmündung in den Reingasraum 14 mit Wülsten 22 versehen, die durch nicht dargestellte Mittel auf der Trennwand 12 befestigt und abgedichtet sind.

Die zu reinigende Staubluft wird an einem nicht dargestellten Einlass dem Staubgasraum 13 kontinuierlich zugeführt. Während die Luft in die Filterschläuche 21 dringt, wird der Staub an deren Aussenflächen zurückgehalten und fällt in den angedeuteten Trichter 23, aus welchem er durch nicht dargestellte Mittel, z.B. eine Zellenradschleuse, ausgetragen wird. Die so gereinigte Luft gelangt in den Reingasraum 14 und tritt bei dessen Auslass 24 aus.

Auf dem Deckel 16 ist ein Druckluftbehälter 25 befestigt, an dessen oberer Wandung 26 Spülluftventile 27 angebracht sind. An der unteren Wandung 29 des Druckluftbehälters 25 sind Spülluftleitungen 30 angebracht, die in diesen Druckluftbehälter 25 bis zum zugeordneten Ventil 27 eindringen. Die Spülluftleitungen 30 verlaufen vertikal in den Reingasraum 14 und sind mit Spüllanzen 31 in deren Mitte T-förmig verbunden. Die Spülluftleitungen 30 und die Spülluftlanzen 31 haben den gleichen Durchmesser. Die Spülluftlanzen 31 tragen Reihen von Ausblasdüsen 32, die gegen die Einmündungen der Filterschläuche 21 in den Reingasraum 14 gerichtet sind. Die Verbindung einer Spülluftleitung 30 mit der zugehörigen Spülluftlanze 31 teilt die Reihe von Ausblasdüsen (32) in zwei symmetrische Gruppen auf.

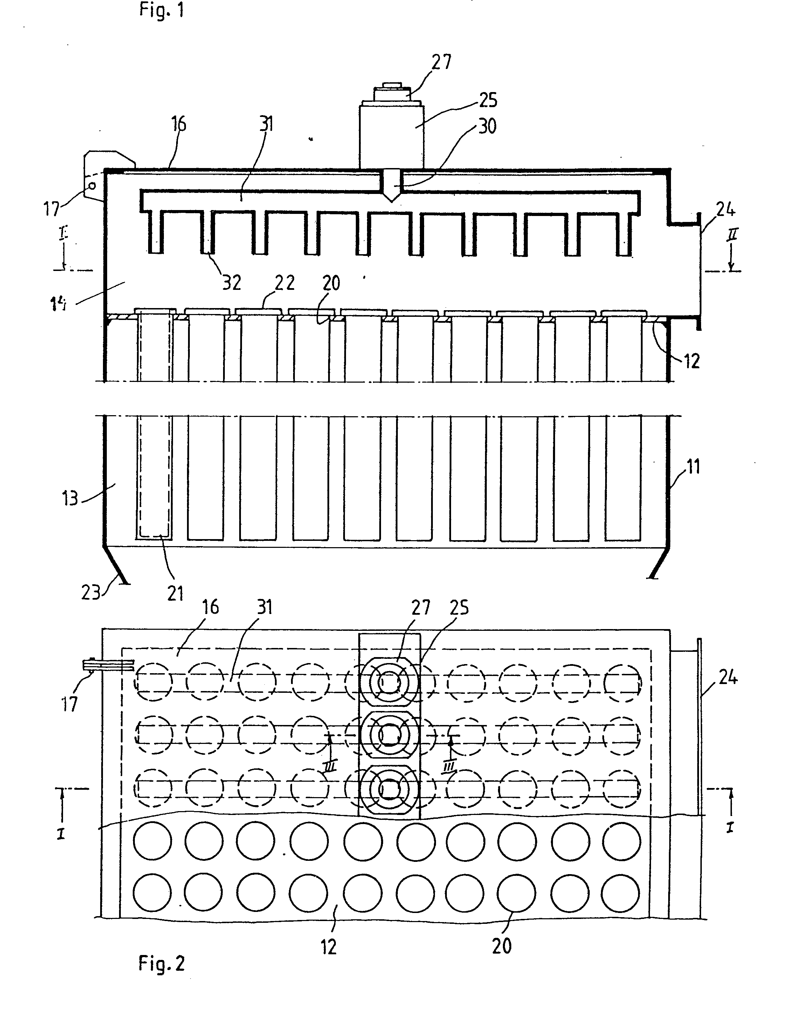

Wie aus Fig. 2 im Grundriss ersichtlich, ist der Druckluftbehälter 25 im Bereich der Filterschläuche 21 angeordnet, und nicht seitlich wie bei den bisherigen Konstruktionen.

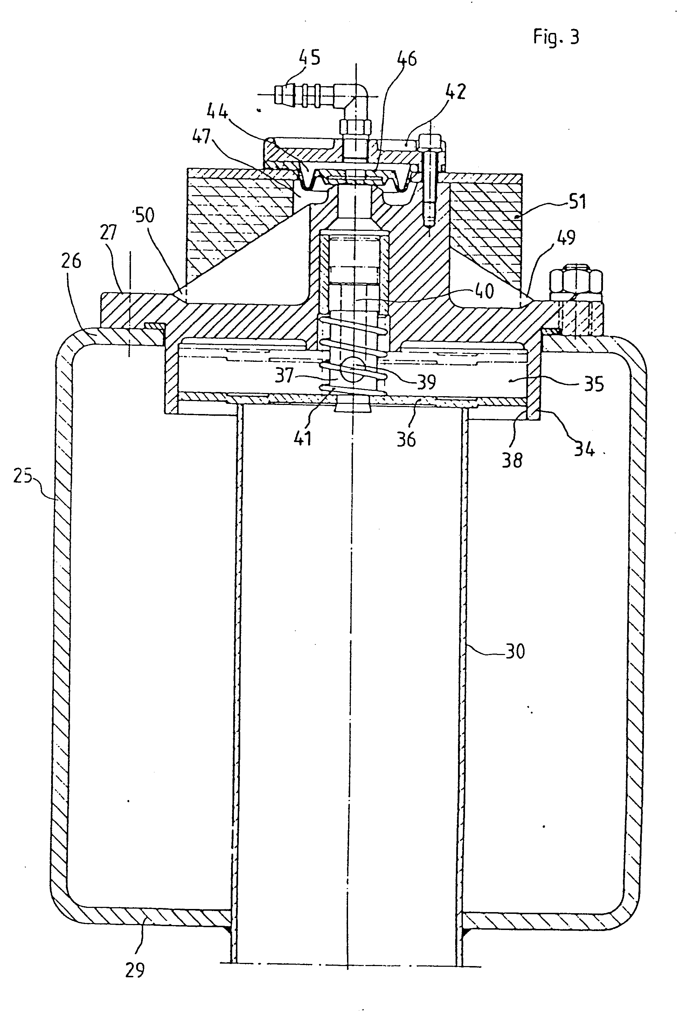

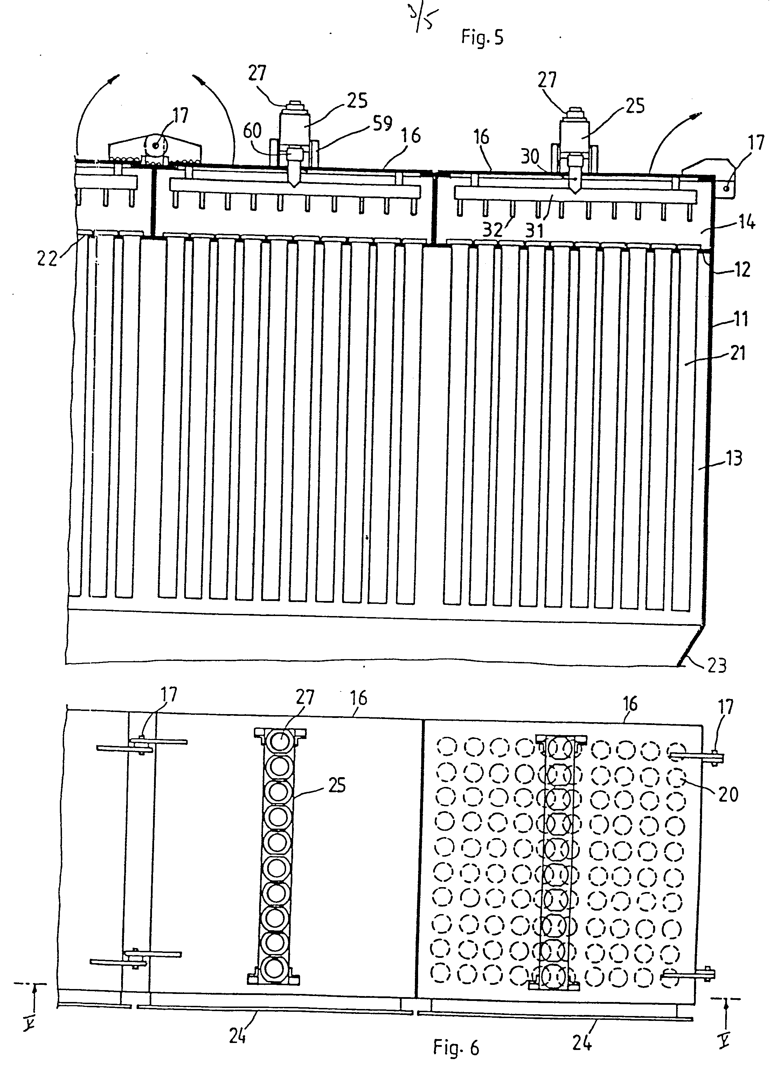

Das in Fig. 3 dargestellte Spülluftventil 27 weist ein Gehäuse 34 auf, an dessen Ventilkammer 35 eine Ventilplatte 36 angeordnet ist, die den Einlauf der Spülluftleitung 30 sperrt. An der Ventilplatte 36 ist ein Führungszylinder 37 angebracht, der mit einer Oeffnung 39 versehen ist, die die Ventilkammer 35 mit einem Entlüftungskanal 40 verbindet. Um den Führungszylinder 37 ist eine Vorspannfeder 41 für die Ventilplatte 36 angebracht. Zwischen der Ventilplatte 36 und der Wandung 38 der Ventilkammer 35 ist ein kleines Spiel vorgesehen. Der von diesem kleinen Spiel bestimmte Durchflussquerschnitt ist aber viel kleiner als der Strömungsquerschnitt durch die Oeffnung 39 und den Entlüftungskanal 40. Zum Absperren des Entlüftungskanals 40 dient ein Vorsteuerventil 42, das eine von einer Vorsteuerleitung 45 beaufschlagte Membrane 44 aufweist, die mit einem Ventilsitz 46 in einem Abluftraum 47 zusammenwirkt. Um den oberen Teil des Ventiles 27 ist eine auf Rippen 49, 50 des Gehäuses 34 abgestützte thermische Isolation 51 angebracht. Der Abluftraum 47 ist bei der Rippe 50 mit der Atmosphäre verbunden.

Um zu vermeiden, dass die Ablagerung von Staub auf die Filterschläuche zu dick wird, und somit der Förderdruck für die zu reinigende Luft zu hoch, werden periodisch die Spülluftventile 27 sukzessiv betätigt, damit jeweils eine Reihe von Filterschläuchen 21 durch die zugehörige Spülluftlanze 31 mit stossartig abgegebener Spülluft beaufschlagt wird. Damit verformen sich die Filterschläuche 21 der gereinigten Reihe und Staub fällt von deren Oberfläche und wird aus dem Trichter 23 ausgetragen.

Während des normalen Betriebes des Filters überträgt die Vorsteuerleitung 45 einen Druck auf die Membrane 44, die gegen den Ventilsitz 46 angepresst wird und damit den Entlüftungskanal 40 absperrt. Ueber das kleine Spiel zwischen der Ventilplatte 36 und der Wandung 38 kann sich der Druck des Druckluftbehälters 25 in die Ventilkammer 35 fortpflanzen, und die Ventilplatte 36 sperrt die Spülluftleitung 30 gegenüber dem Druckluftbehälter 25 ab.

Wenn die betreffende Reihe Filterschläuche 21 gereinigt werden muss, lüftet das nicht dargestellte Steuergerät die Vorsteuerleitung 45 ab, und die Membrane 44 hebt schlagartig vom Ventilsitz 46 ab, so dass die Ventilkammer 35 über die Oeffnung 39, den Entlüftungskanal 40 und den Abluftraum 47 rasch entlüftet wird, die Ventilplatte 36 schlagartig nach oben öffnet, und die Spülluft stossartig durch die Spülluftleitung 30, die Spülluftlanze 31 und die Ausblasdüsen 32 in die Filterschläuche 21 gelangt. Kurz darauf wird die Membrane 44 über die Vorsteuerleitung 45 wieder geschlossen, und die vom Druckluftbehälter 25 über das kleine Spiel zwischen Ventilplatte 36 und Wandung 38 in die Ventilkammer 35 strömende Druckluft schliesst die Ventilplatte 36 wieder.

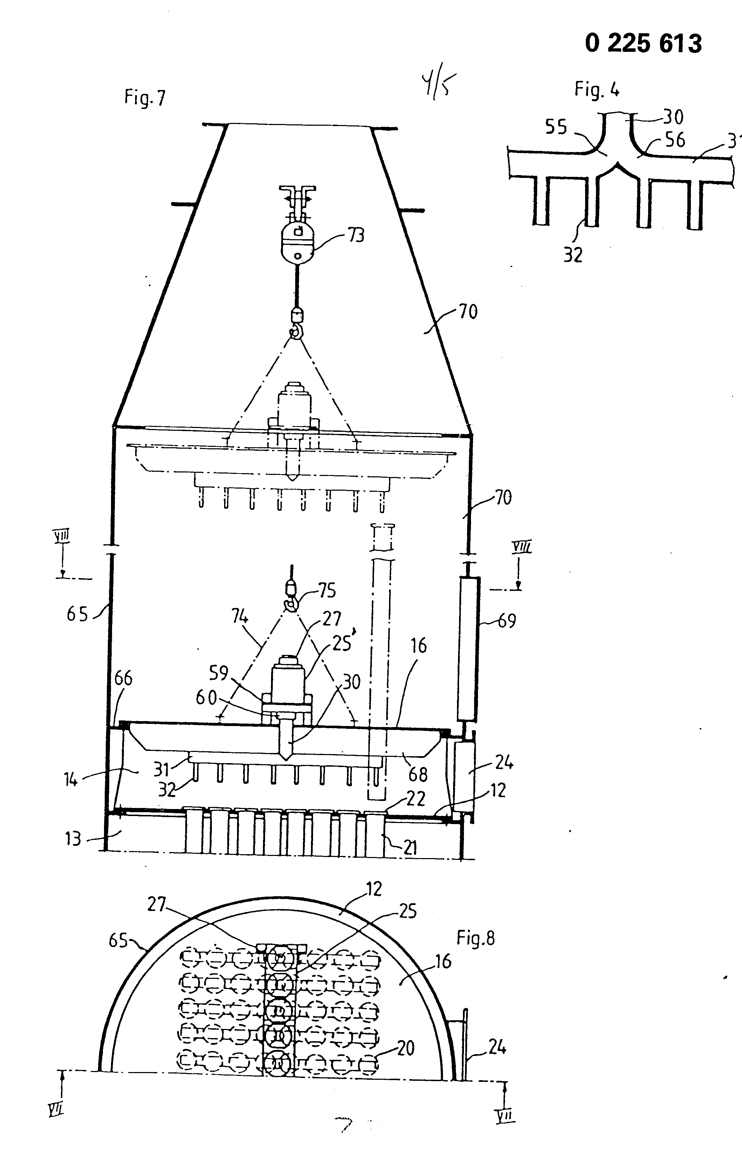

Bei der Variante der Fig. 4 ist die Spülluftleitung 30 über zwei entgegengesetzte Bogen 55, 65 mit der Spülluftlanze 31 verbunden.

Bei der Ausführungsform der Fig. 5, 6 ist ein Grossfilter dargestellt, der aus einer Reihe von Filtern besteht, die je mit einem Druckluftbehälter 25 versehen sind. Diese Druckluftbehälter 25 sind auf ihren respektiven Deckeln 16 über Tragrahmen 59 abgestützt und befestigt. Damit ist es möglich, von aussen her die zweiteilig ausgebildeten Spülluftleitungen 30 durch Verbindungsmuffen 60 zu verbinden, was die Montage und die Wartung der Spülluftlanzen 31 erleichtert. Die links dargestellte Achse 17 ist
zwischen den Deckeln 16 von zwei benachbarten Filtern angeordnet und kann für das Aufklappen dieser beiden Deckel 16 benützt
werden.

Bei der Ausführungsform der Fig. 7, 8 dient der runde Turm 65
eines pneumatischen Saughebers für die Entladung von Schüttgut
aus Schiffen, als Gehäuse für den Filter. Als Staubgasraum 13
dient der nicht weiter dargestellte Abscheider der pneumatischen
Förderanlage. Die vom geförderten Produkt getrennte Förderluft
wird durch die Filterschläuche 21 gereinigt und am Auslass 24
durch das nicht dargestellte Fördergebläse aus dem Reingasraum
14 abgesaugt. Der runde Deckel 16 ist durch nicht dargestellte,
entriegelbare Mittel auf einem Innenring 66 des runden Turms 65
befestigt. Um die Tragfähigkeit dieses Deckels 16 zu erhöhen, ist
er durch angeschweisste Rippen 68 mit den Spülluftlanzen 31 verbunden. Eine Türe 69 dient als Zugang zum Wartungsraum 70 im oberen Teil des runden Turms 65. Dieser Wartungsraum 70 steht nie
unter dem Betriebsunterdruck, so dass die Türe 69 in dem am wenigsten  mechanisch beanspruchten Teil dieses runden Turms 65
angebracht ist. Der Druckluftbehälter 25 und die Spülluftventile 27 sind während des Betriebes des Saughebers somit zugänglich.

Soll ein Filterschlauch 21 ausgetaucht werden, so kann nach
Unterbrechen des Betriebs des Saughebers die Verbindung zwischen
dem Deckel 16 und dem Innenring 66 des runden Turms 65 aufgehoben
werden. Mit einer im konischen Oberteil 70 des runden Turms 65
angeordneten Winde 73 wird der durch Tragseile 74 am Kranhaken 75
der Winde 73 aufgehängte Deckel 16 gehoben , und der defekte
Filterschlauch 21 kann in die strichpunktiert dargestellte Lage
herausgezogen und ausgewechselt werden.

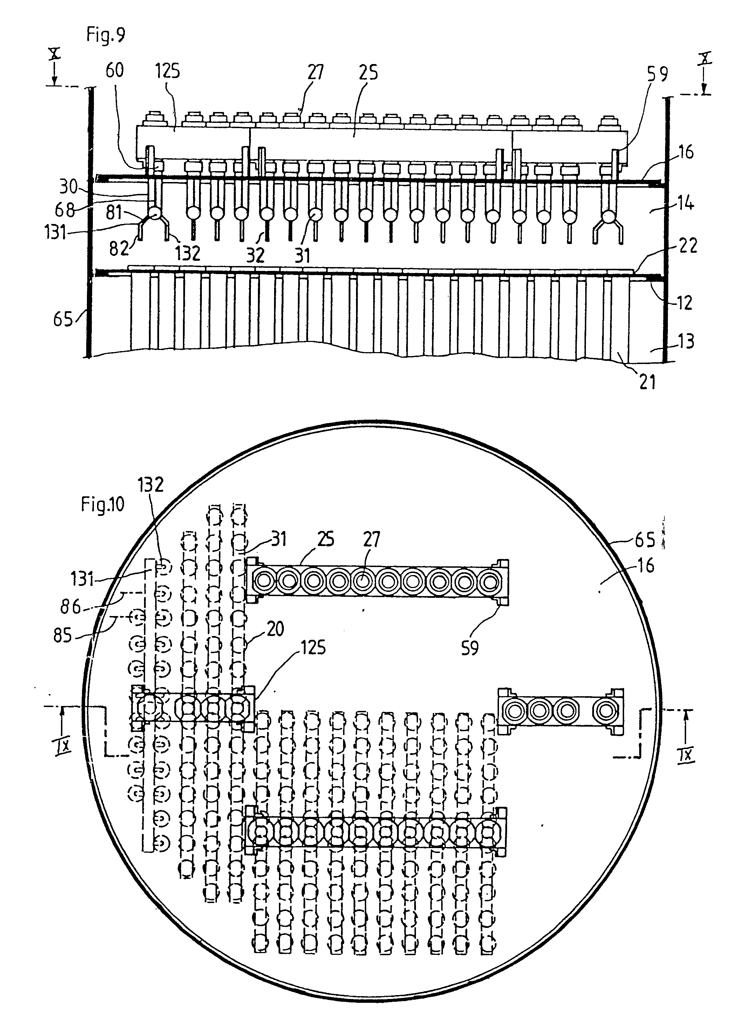

Bei der Ausführungsform der Fig. 7, 8 ist im Verhältnis zur Fläche des Grundrisses des runden Turms 65 nur eine relativ kleine
Zahl von Filterschläuchen 21 dargestellt worden. Es gibt aber Fälle, wo die Fläche des Grundrisses für das Unterbringen der notwendigen Fläche der Filterschläuche 21 nur knapp genügt. Die Ausführungsform der Fig. 9, 10 zeigt, wie die zu Verfügung stehende Grundrissfläche ausgenützt werden kann, um eine grösstmögliche Anzahl von Filterschläuchen 21 unterzubringen.

Es sind zwei Druckluftbehälter 25 und zwei kürzere Druckluftbehälter 125 vorgesehen. Neben den normalen Spülluftlanzen 31, die vertikal über der jeweiligen Reihe von Filterschläuchen 21 liegen, sind auch spezielle Spülluftlanzen 131 vorgesehen, die im Grundriss zwischen zwei Reihen Filterschläuchen 21 angeordnet sind. Von den Spülluftlanzen 131 zweigen Ausblasdüsen 132 zuerst schräg nach unten (Teil 81) und gehen in einen vertikalen Ausblasteil 82 über. Beim Querschnitt 85 der Spülluftlanze 31 (Fig. 10) sind zwei Ausblasdüsen 132 symmetrisch zur vertikalen Ebene durch die Längsachse dieser Spülluftlanze 132 angeordnet. Beim Querschnitt 86 ist eine Ausblasdüse 132 einseitig zur vertikalen Ebene durch die Längsachse dieser Spülluftlanze 131 angeordnet. Damit lässt sich die Belegung des Querschnittes des Turmes 65 an dessen runde Form anpassen.

TZ 013

Patentansprüche

1. Filter für Luft und Gase mit in einem Staubgasraum angeordneten Filterkörpern wie Filterschläuchen (21), Filtersäcken u.dgl., die in einen Reingasraum (14) münden, mit einer Spülvorrichtung (25-60) zum periodischen, stossweisen Einblasen von Spülluft in die Mündungen der Filterkörper (21), wobei diese Spülluftvorrichtung (25-60) einen Druckluftbehälter (25, 125) mit an seiner Wandung (26) angebrachten Spülluftventilen (27) zum wahlweisen Beaufschlagen von im Reingasraum (14) angeordneten, jeweils eine Reihe von Ausblasdüsen (32, 132) tragenden Spülluftlanzen (31, 131) aufweist, die mit den Spülluftventilen (27) über Spülluftleitungen (30) verbunden sind, die an einer anderen Stelle durch die Wandung (29) des Druckluftbehälters (25, 125) in diesen bis zum zugeordneten Ventil (27) eindringen, dadurch gekennzeichnet, dass der an der oberen Wand (Deckel 16) des Reingasraumes (14) befestigte Druckluftbehälter (25, 125), im Grundriss gesehen, im Bereich der Filterkörper (21) angeordnet ist, wobei die Spülluftleitungen (30) vertikal verlaufen, und mit den Spülluftlanzen (31, 131) zwischen Gruppen von Ausblasdüsen (32, 132), vorzugsweise in der Mitte dieser Spülluftlanzen (32, 132), verbunden sind.

2. Filter nach Anspruch 1, dadurch gekennzeichnet, dass die Spülluftleitungen (30) T-förmig mit den Spülluftlanzen (31, 131) verbunden sind.

3. Filter nach Anspruch 1, dadurch gekennzeichnet, dass die Spülluftleitungen (30) über zwei entgegengesetzte Bogen (55, 56) mit den Spülluftlanzen (31, 131) verbunden sind.

4. Filter nach einem der Ansprüche 1 bis 3, dadurch gekennzeichnet, dass die Durchmesser einer Spülluftlanze (31, 131) und **ihrer** Spülluftleitung (30) gleich sind.

5. Filter nach einem der Ansprüche 1-4, dadurch gekennzeichnet, dass eine Ausblasdüse (132) zuerst schräg nach unten (Teil 81) von einer Spülluftlanze (131) abzweigt, und in einen vertikalen Ausblasteil (82) übergeht.

6. Filter nach Anspruch 5, dadurch gekennzeichnet, dass bei bestimmten Querschnitten (85) einer Spülluftlanze (131), Ausblasdüsen (132) mit schrägem Verlauf symmetrisch zur vertikalen Ebene durch die Längsachse der Spülluftlanze (131) angeordnet sind.

7. Filter nach Anspruch 5, dadurch gekennzeichnet, dass bei bestimmten Querschnitten (86) einer der Spülluftlanzen (131), Ausblasdüsen (132) mit schrägem Verlauf einseitig zur vertikalen Ebene durch die Längsachse der Spülluftlanze (131) angeordnet sind.

8. Filter nach einem der Ansprüche 1-7, dadurch gekennzeichnet, dass die obere Wand des Reingasraumes (14) als Deckel (16) beweglich, vorzugsweise aufklappbar, ist.

9. Filter nach Anspruch 8, dadurch gekennzeichnet, dass die Achse (17), um welche der Deckel (16) aufklappbar ist, auf der Seite liegt, wo ein weiterer Filter angeordnet ist.

10. Filter nach Anspruch 8, dadurch gekennzeichnet, dass eine Hebevorrichtung (73, 75), vorzugsweise eine Seilwinde (73), vorhanden ist, um den Deckel (16) nach oben zu entfernen.

11. Filter nach Anspruch 10, dadurch gekennzeichnet, dass er im Turm (65) eines pneumatischen Saughebers für die Entladung von Behältern, wie Schiffen, verwendet wird.

12. Filter nach Anspruch 11, dadurch gekennzeichnet, dass der Zugang (Türe 69) zum Innenraum des Turms (65) oberhalb des Deckels (16) des Filters angeordnet ist.

Fig. 1

7/5

Fig. 2

Fig. 3

3/5

Fig. 5

Fig. 6

0 225 613

4/5

Fig. 7

Fig. 4

Fig.9

Fig.10